# EUROPÄISCHE PATENTSCHRIFT

(11) **EP 3 600 731 B1**
(45) Veröffentlichungstag und Bekanntmachung des Hinweises auf die Patenterteilung: **16.08.2023**
(21) Anmeldenummer: 18710832.9
(22) Anmeldetag: 09.03.2018
(51) Int. Cl.: F04D 29/10, F04D 29/16, F04D 29/02, B22F 3/11, B22F 7/00, F16J 15/44, C22C 1/08

(54) **VERBUNDBAUTEIL**
COMPOSITE PART
ÉLÉMENT COMPOSITE

(30) Priorität: 20.03.2017 DE 102017204588
(43) Veröffentlichungstag der Anmeldung: 05.02.2020
(73) Patentinhaber: KSB SE & Co. KGaA, 67227 Frankenthal (DE)
(72) Erfinder: BÖHM, Alexander, 67227 Frankenthal (DE); FREIBERGER, Clemens, 67227 Frankenthal (DE); KAUL, Sebastian, 67227 Frankenthal (DE); KÜHL, Andrea, 67227 Frankenthal (DE)
(86) Internationale Anmeldenummer: PCT/EP2018/055878
(87) Internationale Veröffentlichungsnummer: WO 2018/172101

(56) Entgegenhaltungen:
- EP-A1- 3 056 684
- WO-A1-2014/130211
- WO-A1-2015/020916
- DE-A1-102012 203 259
- DE-C1- 3 708 956
- US-A- 4 867 638
- US-A1- 2005 181 197

## Beschreibung

Die Erfindung betrifft ein Dichtelement einer Kreiselpumpe ausgeführt als Verbundbauteil nach Anspruch 1, sowie ein Verfahren zur Herstellung eines entsprechenden Dichtelements einer Kreiselpumpe ausgeführt als Verbundbauteil.

Kreiselpumpen weisen an verschiedenen Stellen durchströmbare Spalte auf, wie zum Beispiel zwischen dem Laufrad und dem Gehäuse, wo ein Druckunterschied einen teilweise sehr verlustreichen Leckagestrom hervorruft. Die Abdichtung hier muss bezüglich der Größenordnung des Spaltes so gewählt sein, dass dieser weder zu groß ist, dass also der Wirkungsgrad der Kreiselpumpe infolge hoher Verluste über diesen Spalt sinkt, noch darf der Spalt zu klein sein, weil sonst die Gefahr besteht, dass es zu einem Anlaufen, also einer Berührung zwischen dem rotierenden und dem stillstehenden Bauteil kommt.

Bei einer solchen Abdichtung kann es sich beispielsweise um eine Spaltringdichtungsanordnung handeln. Spaltringdichtungen dienen in Kreiselpumpen zur Abdichtung von Räumen unterschiedlicher Drücke, wobei in einer Trennwand zwischen den Räumen ein rotierendes Element angeordnet ist. Bei dem rotierenden Element kann es sich um eine Welle, eine Nabe eines Laufrades, einen Saugmund eines Laufrades oder dergleichen handeln. Die Anordnung umfasst ein nicht rotierendes Element und ein rotierendes Element. Bei dem nicht rotierenden Element kann es sich beispielsweise um einen Spaltring handeln, der am Gehäuse angeordnet ist, oder um das Gehäuse selbst bzw. um ein Gehäuseteil. Bei dem rotierenden Element kann es sich beispielsweise um einen Laufring handeln, der auf dem Laufrad angeordnet ist, oder um das Laufrad selbst bzw. einen Teil des Laufrades, beispielsweise bei einem geschlossenen Laufrad die Deckscheibe des Laufrades. Der Spalt, der zwischen dem rotieren-den Element und dem nicht rotierenden Element gebildet wird, wirkt als Drossel zwischen den Räumen unterschiedlicher Drücke und verhindert einen zu hohen Strom vom Raum höheren Druckes in den Raum niedrigeren Druckes. Je kleiner der Spalt zwischen den beiden Elementen ist, desto geringer sind die Wirkungsgradverluste der Kreiselpumpe. Diesem Bestreben steht jedoch entgegen, dass ein zu kleiner Spalt sehr schwierig in Einklang mit den Fertigungstoleranzen sowie den betrieblichen Einflüssen zu bringen ist. Es gilt, Berührungen zwischen den Elementen zu vermeiden, um ein Anstreifen des rotierenden Elements an dem nicht rotierenden Element zu verhindern und somit um Verschleiß vorzubeugen. Aufgrund der notwendigen Toleranzen bei der Herstellung der einzelnen Komponenten gibt es eine Mindestspaltweite, die gerade verhindert, dass Elemente sich berühren und somit Verreibung und Verschleiß entsteht. Es treten jedoch im Betrieb insbesondere beim Anfahren bzw. Abfahren der Pumpe immer wieder Situationen auf, in denen es zur Berührung kommt und dann ein Pressen bzw. Materialverschleiß auftritt.

Spaltdichtungen, die dies berücksichtigen sind in verschiedenen Ausgestaltungen bekannt. Spaltdichtungen werden beispielsweise aus verschiedenen Materialien geschaffen, teilweise weisen sie aber auch spezielle dem Bedarf angepasste Oberflächen auf.

Die US 4 867 638 A beschreibt eine Spaltringdichtung einer Kreiselpumpe, die zwei Ringe umfasst, die aus einem gesinterten Material bestehen.

Die DE 10 2012 203259 A1 beschreibt eine Kraftstoff-Fördereinrichtung für eine Brennkraftmaschine, bei der innerhalb einer Lagerbohrung eine Dichtungsanordnung mit wenigstens einem Wellendichtring angeordnet ist.

Die WO 2015/020916 A1 beschreibt eine metallische Nanostruktur auf einer Oberfläche, um Verschleiß zu widerstehen und der Oberfläche eine Härte, eine Schmierung und eine Wärmeleitfähigkeit zu verleihen.

Die US 2005/181197 A1 beschreibt einen porösen keramischen Sinterkörper für ein verschiebbares Element.

Die DE 90 01 229 U1 beschreibt eine Anordnung mit einem Spaltring, der aus zwei unterschiedlichen Bereichen besteht, einem massiven ersten Bereich, der dem feststehenden Gehäuse zugewandt ist und einem zweiten Bereich, der mit taschenförmigen Vertiefungen versehen ist, dieser zweite Bereich ist dem rotierenden Teil zugewandt.

Die taschenförmigen Vertiefungen sind vorteilhaft für die Abdichtung des Spaltes, jedoch sehr aufwändig herzustellen.

Die DE 42 11 809 A1 zeigt eine Schwimmringdichtung, die ebenfalls zur Abdichtung eines Spaltes in einer Kreiselpumpe vorgesehen ist. Eine Ausgestaltung dieser Schwimmringdichtung sieht vor, dass die Oberfläche zum bewegten Gegenüber mit einer wabenartigen Oberflächenstruktur versehen ist.

Diese Dichtungen zeigen den Effekt, dass die Wabenstruktur durch die Vielzahl von einzelnen Wabenwänden zahlreiche Sperren in den Spalt zwischen einem bewegten und einem festen Bauteil einer Kreiselpumpe einbringen, die insbesondere bei großem Druckunterschied ein Abfließen von Flüssigkeit verhindern. Somit wird der Wirkungsgrad der Kreiselpumpe verbessert. Gleichzeitig ist die Wabenstruktur mit den einzelnen dünnen Wabenwänden sehr flexibel, so dass bei eventuellem Anlaufen des rotierenden Teils an das feste Bauteil nur eine geringe Verformung entsteht und eine Beschädigung der Kreiselpumpe minimal ausfällt.

Nachteil dieser Form der Dichtungen ist, dass die taschenförmigen Ausnehmungen sehr aufwändig zu fertigen sind. Teilweise können diese spanabhebend gefertigt werden, durch Bohren, Fräsen, Erodieren oder dergleichen. Weiter lassen sich die Vertiefungen herstellen durch Prägen, Einwalzen oder sie werden im 3d Druck oder aus dünnen Blechen verschweißt. Allen Methoden ist gemeinsam, dass sie sehr aufwändig und dadurch teuer sind.

Aufgabe der vorliegenden Erfindung ist es daher ein Dichtelement für eine Kreiselpumpe herzustellen, das als Verbundbauteil bestehend aus mindestens einer massiven Materialschicht und mindestens einer weiteren Schicht besteht, deren Oberfläche Ausnehmungen aufweist, wobei das Dichtelement einfach und kostengünstig herstellbar sein soll.

Gelöst wird diese Aufgabe durch eine Spaltdichtung gemäß Anspruch 1, nämlich eine Spaltdichtung für eine Kreiselpumpe, insbesondere für deren Bauteile mit durchströmbarem Dichtspalt.

Erfinderungsgemäß ist mindestens ein auswechselbares Bauteil für die Spaltdichtung vorgesehen, wobei das auswechselbare Bauteil auf der dem Dichtspalt abgewandten Seite einen massiven ersten Bereich und auf der dem Dichtspalt zugekehrten Seite einen zweiten Bereich, der mit einer Vielzahl von aneinandergrenzenden taschenförmigen Vertiefungen versehen ist, umfasst, wobei der zweite Bereich durch ein einstückiges festes, unregelmäßiges, poröses Medium gebildet wird.

Der poröse zweite Bereich ist getrennt vom ersten Bereich in einem vorteilhaften, einfachen und damit kostengünstigen Verfahren herstellbar sind. Die beiden Bereiche werden durch das Fügen zum Verbundmaterial erst zur Spaltdichtung. Diese ist als wechselbares Teil bei Verschleiß einfach durch ein Ersatzteil auszuwechseln. Die Kombination der Materialien kann entsprechend dem jeweiligen Bedarf angepasst werden.

Die Kombination hochwertiger Werkstoffe wie z.B. Edelstahl und Duplexstahl im ersten Bereich mit weniger hochwertigen Werkstoffen wie z.B. Chromstahl im zweiten Bereich ist vorteilhaft zur Optimierung der Kosten- und Materialeffizienz.

Eine weitere vorteilhafte Ausführung hinsichtlich der Materialauswahl bei hohen Anforderungen ist die Verwendung gleicher hochwertiger Werkstoffe für die erste und zweite Bereiche, wie z.B Duplexstahl mit Duplexstahl.

In einer vorteilhaften Ausgestaltung der Erfindung ist das poröse Medium ein Schaum und/oder ein Schwamm. Dies führt zu einer sehr gleichmäßigen Verteilung von Porenraum und stützenden Zwischenwänden. Je nach Ausgestaltung sind die einzelnen Poren in sich abgeschlossene Räume, die nicht mit dem Feststoff der das Material bildet, sondern mit einem viel leichteren Gas gefüllt. Andernfalls können die Porenräume auch kontinuierlich miteinander verbunden sein, dies kann zu einer vollständigen Befüllung des porösen Bereichs mit dem Fördermedium der Kreiselpumpe führen. Bei spezieller Ausgestaltung kann auch eine Befüllung des kontinuierlichen Porenraumes mit einer Sperrflüssigkeit vorgesehen sein.

In einer weiteren vorteilhaften Ausgestaltung ist der Schaum beziehungsweise Schwamm aus einem Metall hergestellt, insbesondere aus einem Eisenmetall. Dies ermöglicht besonders stabile, feste Strukturen in dem Schaum zu fertigen. Als Metallschaum kommt in einfachster Art ein Aluminiumschaum in Frage, der jedoch aufgrund seiner Materialeigenschaften nur einen sehr begrenzten Einsatzbereich hat. Weitere Einsatzmöglichkeiten ergeben sich mit genanntem Eisen- bzw. Stahlschaum. Als Metallschaum kommen nicht nur Eisen-Basis-Schaum sondern z.B. auch Ni-Basis-Werkstoffe oder andere metallische Schäume in Frage.

Welche Art der metallischen Legierung die geeignetste ist, kann anhand der äußeren Anforderungen abgeleitet werden.

Erfindungsgemäß ist der Verbund zwischen dem ersten und dem zweiten Bereich durch ein Gussverfahren hergestellt, dabei ist der zweite Bereich aus einem porösen Material hergestellt und in eine Gussform einbringbar. In einem nächsten Schritt wird der massive Bereich aus einem flüssigen Metallwerkstoff direkt an das poröse Material angegossen. Dadurch entsteht eine besonders innige Verbindung zwischen dem massiven Bereich und dem porösen Bereich. Der dadurch gebildete Dichtring hat mit dem massiven Bereich ein tragendes Element, mit dem der Dichtring fest mit einer Seite der Dichtstelle verbunden werden kann. Der poröse Bereich ist zu dem abzudichtenden Spalt hin gewandt und verschließt diesen so, dass er möglichst keinen Verlust mehr darstellt, in speziellen Situationen aber auch ein kurzzeitiges Anlaufen zulässt, ohne zu einer wesentlichen Beschädigung der des Dichtrings oder der Maschine zu führen. Das Angießen des porösen Bereichs ist als stoffschlüssige Verbindung dem Verschweißen vergleichbar, jedoch ist die Herstellung wesentlich einfacher und die Verbindung der beiden Bereiche quasi vollflächig entlang ihres Übergangsbereichs.

In einer weiteren vorteilhaften Ausgestaltung sind dem Bauteil der erste Bereich und der zweite Bereich aus demselben Material hergestellt. Vorteilhaft ist dabei, dass für beide Materialien die gleichen chemischen und physikalischen Eigenschaften angenommen werden können.

In einer weiteren Variante der Erfindung sind bei dem Bauteil der erste Bereich und der zweite Bereich aus unterschiedlichen Materialien herstellbar. Ist beispielsweise die Maschine im Spaltbereich sehr empfindlich bezüglich unterschiedlicher Betriebsbedingungen, so kann es vorteilhaft sein, ein speziell weiches poröses Material zu verwenden. Für derart weiche poröse Bereiche eignen sich neben ferritischen, austenitischen und Duplexstählen auch Nickel-Basis-Werkstoffe, Titanlegierungen sowie Bronze und Messing, das jeweils als Poröser Werkstoff an einen gleichartigen massiven Bereich angegossen ist.

Weiter ist der zweite Bereich aus einem Material großer Porosität, insbesondere bis zu 90 prozentiger Porosität, herstellbar. Dies hilft einerseits Material zu sparen, andererseits kann auch im Fall eines mitbewegten Dichtrings die träge Masse deutlich reduziert werden.

Erfindungsgemäß ist der Übergang von dem ersten zu dem zweiten Bereich als kontinuierlicher Übergang der Porosität ausgestaltet. Von Vorteil ist dabei, dass die Verbindung beider Bereiche besonders stabil ausgeführt ist, da zu übertragende Kräfte entsprechend abgeleitet werden können. Der Ubergang von dem ersten zu dem zweiten Bereich ist in Form eines Gradientenwerkstoffes ausgebildet. Die Gradierung ist kontinuierlich; der gradierte Bereich erstreckt sich über wenige Mikrometer bis hin zu einigen Zentimetern.

Wesentlich ist im Zusammenhang mit der Erfindung, dass die Spaltdichtung so hergestellt ist, dass zur Verbindung von erstem und zweitem Bereich kein Fügeverfahren wie beispielsweise Kleben oder Löten verwendet wird. Hierdurch wäre keine vergleichbare stabile Verbindung der beiden Bereiche möglich.

Weitere Vorteile und Merkmale der Erfindung ergeben sich aus der Beschreibung von Ausführungsbeispielen anhand von Zeichnungen und aus den Zeichnungen selbst.

Dabei zeigt:
- Figur 1: einen Eisenschaum in schematischer Darstellung,
- Figur 2: eine erfindungsgemäße Spaltdichtung,
- Figur 3: den Übergangsbereich zwischen den beiden Materialien und
- Figur 4: ein Dichtediagramm für den Übergangsbereich.

Metallschäume sind in verschiedenen Ausgestaltungen bekannt. Die Herstellung ist je nach Ausgangslegierung unterschiedlich. Bekannt sind Sinterverfahren für die ein Grünkörper auf unterschiedliche Weise mit Porenräumen versehen wird.

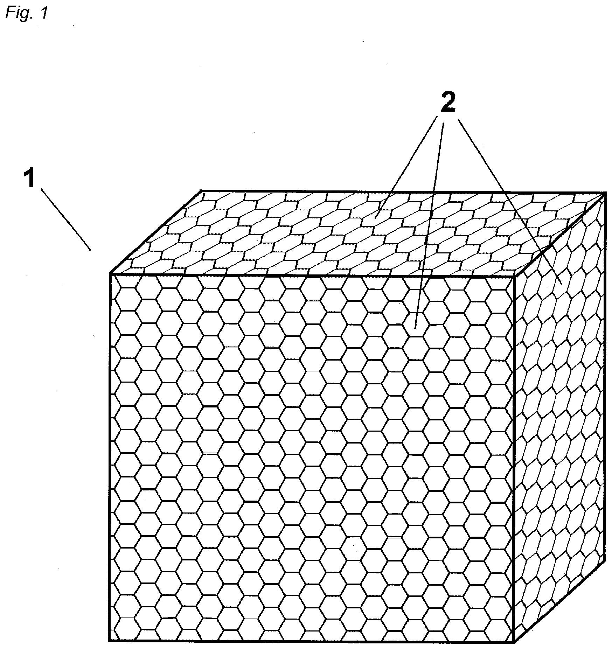

Die Figur 1 zeigt schematisch ein poröses Material 1. Die relativ gleichmäßige polyederförmige Zellstruktur mit ihren gleichmäßigen Poren 2 kann durch entsprechende Beeinflussung bei der Herstellung geschlossenporig oder offenporig ausgestaltet sein.

Die Porengröße und deren Verteilung haben direkten Einfluss auf wesentliche Eigenschaften des Schaumes wie zum Beispiel die Dichte oder die Druckfestigkeit.

Die Permeabilität, also die Durchströmbarkeit des Materials hängt deutlich vom Grad der Offenporigkeit des Materials ab.

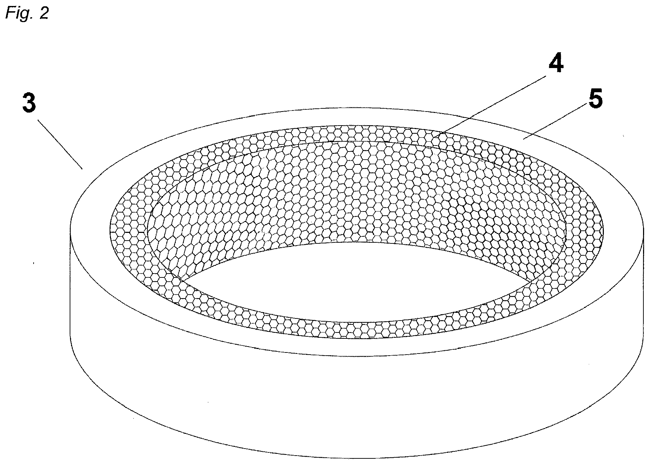

Die Figur 2 zeigt eine erfindungsgemäße Spaltdichtung 3, die als Verbundbauteil aus dem in Fig. 1 dargestellten porösen Bereich 4 und einem massiven Bereich 5 zusammengesetzt ist. Beide Teile sind in diesem Ausführungsbeispiel miteinander verbunden, indem der massive Bereich 5 an den porösen Bereich 4 angegossen ist. Hierfür ist der poröse Bereich 4 als Einleger in einer Gussform vorgesehen. sein. In diese Gussform wird dann das flüssige Material, das den massiven Bereich 5 bilden soll eingefüllt. Für den erfolgreichen Guss ist es wesentlich, dass der poröse Bereich 4 dabei nicht zerstört wird und sich eine Verbindung der beiden Bereiche einstellt.

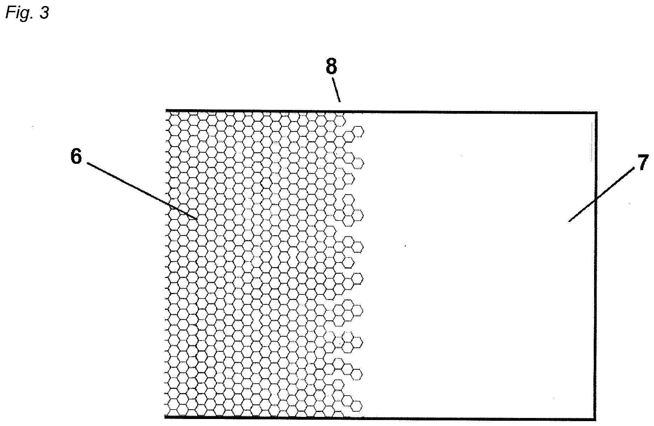

Die Figur 3 zeigt den Verbindungsbereich zwischen dem Porösen Bereich 6 und dem massiven Bereich 7 als schematische Abbildung. In dem Übergangsbereich 8 ist dargestellt, dass einzelne Zellen des porösen Bereichs mit dem flüssigen Material gefüllt wurden. Es ist außerdem zu erkennen, dass einige Zellen durch die flüssige Schmelze selbst aufgeschmolzen wurden. Es ist weiter zu erkennen, dass es auch Porenbereiche gibt, die von dem flüssigen Material umgeben sind.

Die Darstellung zeigt die innige Verbindung, die die beiden Materialien in dem beschriebenen Angussverfahren eingegangen sind. Die Anbindung zwischen dem porösen Bereich 4 und dem massiven Bereich 5 beruht auf einer stoffschlüssigen Verbindung. Beim Gießvorgang wird die Zellwand der letzten aufgeschmolzenen Zelle des porösen Bereichs angeschmolzen aber nicht komplett aufgeschmolzen. Beim Abkühlen des aufgeschmolzenen Bereichs der Zellwand und der eingegossenen Schmelze des Materials des massiven Bereichs 5 entsteht die stoffschlüssige Verbindung. Dies garantiert eine feste Verbindung, über die angreifende Kräfte vollflächig weitergeleitet werden können.

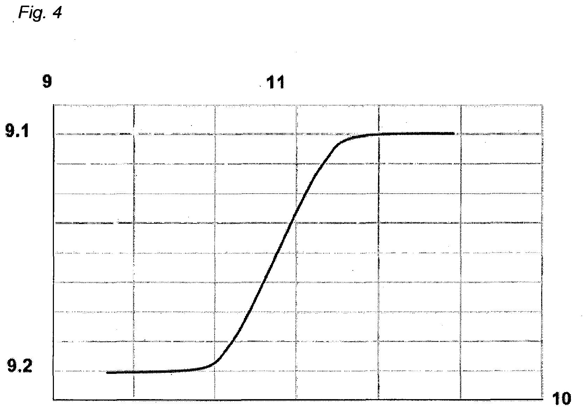

Die Figur 4 zeigt den Verlauf der Dichte 9 über Länge 10 des Verbundbauteils. Im Beispiel der ringförmigen Spaltdichtung aus der Figur 2 wäre die Länge 10 entlang des Radius legen. Die Figur zeigt einen deutlichen Anstieg von der Dichte 9.2 des porösen Materials über eine geringe Länge 10 in der, wie in der Figur 3 dargestellt, poröses und massives Material parallel vorliegen, hin zur Dichte 9.1 des massiven Materials.

### Bezugszeichenliste:

- 1: Metallschaum
- 2: Poren
- 3: Spaltdichtung
- 4: Poröser Bereich
- 5: Massiver Bereich
- 6: Metallschaum

- 7: Guss
- 8: Übergangsbereich
- 9: Dichte
- 9.1: Dichte Vollmaterial
- 9.2: Dichte Metallschaum
- 10: Länge
- 11: Dichteübergang

## Patentansprüche

1. Spaltdichtung (3) für eine Kreiselpumpe, insbesondere für deren Bauteile mit durchströmbarem Dichtspalt, wobei mindestens ein auswechselbares Bauteil für die Spaltdichtung (3) vorgesehen ist, wobei das auswechselbare Bauteil auf der dem Dichtspalt abgewandten Seite einen massiven ersten Bereich (5) und auf der dem Dichtspalt zugekehrten Seite einen zweiten Bereich (4), der mit einer Vielzahl von aneinandergrenzenden taschenförmigen Vertiefungen versehen ist, umfasst,
wobei der zweite Bereich (4) durch ein festes, unregelmäßiges, poröses Medium gebildet wird, wobei der Verbund zwischen dem ersten (5) und dem zweiten Bereich (4) durch ein Gussverfahren hergestellt ist, wobei bei der Herstellung des Verbunds durch das Gussverfahren Zellen des porösen zweiten Bereichs (4) durch flüssige Schmelze des Materials des ersten Bereichs aufgeschmolzen werden, wobei der Übergang von dem ersten (5) zu dem zweiten Bereich (4) als kontinuierlicher Übergang der Porosität ausgestaltet ist, und
wobei der Übergang von dem ersten (5) zu dem zweiten Bereich (4) in Form eines Gradientenwerkstoffes ausgebildet ist.

2. Spaltdichtung (3) nach Anspruch 1, **dadurch gekennzeichnet, dass** das poröse Medium ein Schaum und/oder ein Schwamm ist.

3. Spaltdichtung (3) nach Anspruch 2, **dadurch gekennzeichnet, dass** der Schaum beziehungsweise Schwamm aus einem Metall hergestellt ist.

4. Spaltdichtung (3) nach Anspruch 3, **dadurch gekennzeichnet, dass** der Schaum beziehungsweise Schwamm aus einem Eisenmetall hergestellt ist, insbesondere aus einem austentitischen, ferritischen oder duplexartigen Eisenmetall.

5. Spaltdichtung (3) nach Anspruch 3, **dadurch gekennzeichnet, dass** der Schaum beziehungsweise Schwamm aus einem Nichteisenmetall hergestellt ist, insbesondere aus einem Nickel- oder Titanbasismetall oder aus Bronze oder Messing.

6. Spaltdichtung (3) nach einem der vorhergehenden Ansprüche, **dadurch gekennzeichnet, dass** bei dem Bauteil der erste Bereich (5) und der zweite Bereich (4) aus demselben Material hergestellt sind.

7. Spaltdichtung (3) nach einem der vorhergehenden Ansprüche, **dadurch gekennzeichnet, dass** bei dem Bauteil der erste Bereich (5) und der zweite Bereich (4) aus unterschiedlichen Materialien hergestellt sind.

8. Spaltdichtung (3) nach einem der vorherigen Ansprüche, **dadurch gekennzeichnet, dass** der zweite Bereich aus einem Material mit einer bis zu 90 prozentigen Porosität hergestellt ist.

## Claims

1. Gap seal (3) for a centrifugal pump, in particular for the components thereof having a sealing gap which is able to be passed through by a flow, wherein at least one interchangeable component is provided for the gap seal (3), wherein the interchangeable component on that side that faces away from the sealing gap comprises a compact first region (5), and on that side that faces the sealing gap comprises a second region (4) which is provided with a multiplicity of contiguous, pocket-shaped depressions, wherein the second region (4) is formed by a solid, irregular, porous medium, wherein the composite bond between the first region (5) and the second region (4) is established by a casting method, wherein in the establishment of the composite bond by the casting method cells of the porous second region (4) are fused by liquid melt of the material of the first region, wherein the transition from the first region (5) to the second region (4) is designed as a continuous transition of the porosity, and wherein the transition from the first region (5) to the second region (4) is configured in the form of a gradient material.

2. Gap seal (3) according to Claim 1, **characterized in that** the porous medium is a foam and/or a sponge.

3. Gap seal (3) according to Claim 2, **characterized in that** the foam, or the sponge, respectively, is made from a metal.

4. Gap seal (3) according to Claim 3, **characterized in that** the foam, or the sponge, respectively, is made from a ferrous metal, in particular from a austenitic, ferritic or duplex-type ferrous metal.

5. Gap seal (3) according to Claim 3, **characterized in that** the foam, or the sponge, respectively, is produced from a non-ferrous metal, in particular from a nickel-based or titanium-based metal, or from bronze or brass.

6. Gap seal (3) according to one of the preceding claims, **characterized in that** in the component the first region (5) and the second region (4) are produced from the same material.

7. Gap seal (3) according to one of the preceding claims, **characterized in that** in the component the first region (5) and the second region (4) are produced from dissimilar materials.

8. Gap seal (3) according to one of the preceding claims, **characterized in that** the second region is produced from a material with a porosity of up to 90%.

## Revendications

1. Joint d'étanchéité à fente (3) pour une pompe centrifuge, notamment pour ses composants avec une fente d'étanchéité pouvant être traversée, au moins un composant interchangeable étant prévu pour le joint d'étanchéité à fente (3), le composant interchangeable comprenant, sur le côté détourné de la fente d'étanchéité, une première zone massive (5) et, sur le côté tourné vers la fente d'étanchéité, une deuxième zone (4) qui est pourvue d'une pluralité de renfoncements contigus en forme de poches,
la deuxième zone (4) étant formée par un milieu solide, irrégulier, poreux, la liaison entre la première (5) et la deuxième zone (4) étant réalisée par un procédé de coulée ; lors de la réalisation de la liaison par le procédé de coulée, des cellules de la deuxième zone poreuse (4) étant fondues par une masse fondue fluide du matériau de la première zone, la transition de la première (5) à la deuxième zone (4) étant conçue sous forme de transition continue de la porosité, et
la transition de la première (5) à la deuxième zone (4) étant configurée sous la forme d'un matériau à gradient.

2. Joint d'étanchéité à fente (3) selon la revendication 1, **caractérisé en ce que** le milieu poreux est une mousse et/ou une éponge.

3. Joint d'étanchéité à fente (3) selon la revendication 2, **caractérisé en ce que** la mousse ou l'éponge est fabriquée à partir d'un métal.

4. Joint d'étanchéité à fente (3) selon la revendication 3, **caractérisé en ce que** la mousse ou l'éponge est fabriquée à partir d'un métal ferreux, notamment à partir d'un métal ferreux austénitique, ferritique ou duplex.

5. Joint d'étanchéité à fente (3) selon la revendication 3, **caractérisé en ce que** la mousse ou l'éponge est fabriquée à partir d'un métal non ferreux, notamment d'un métal à base de nickel ou de titane ou à partir de bronze ou de laiton.

6. Joint d'étanchéité à fente (3) selon l'une quelconque des revendications précédentes, **caractérisé en ce que** la première zone (5) et la deuxième zone (4) du composant sont fabriquées à partir du même matériau.

7. Joint d'étanchéité à fente (3) selon l'une quelconque des revendications précédentes, **caractérisé en ce que** la première zone (5) et la deuxième zone (4) du composant sont fabriquées à partir de matériaux différents.

8. Joint d'étanchéité à fente (3) selon l'une quelconque des revendications précédentes, **caractérisé en ce que** la deuxième zone est fabriquée à partir d'un matériau présentant une porosité de jusqu'à 90 pour cent.
